# EUROPEAN PATENT APPLICATION

(11) **EP 2 742 808 A2**
(43) Date of publication of application: **18.06.2014**
(21) Application number: 14000472.2
(22) Date of filing: 08.02.2011
(51) Int. Cl.: A23L 1/217, A23B 7/06, A23B 7/152

(54) **Method for preparing pre-cooked potato chips, and for the first frying and second frying and obtaining of fried chips according to this method.**

(30) Priority: 25.02.2010 BE 201000125
(62) Divisional of application: 11000983.4
(71) Applicant: Van Remoortel, Naamloze, 9130 Verrebroek (BE)
(72) Inventor: Van Remoortel, Jozef, 9130 Verrebroek (BE)
(74) Representative: Donné, Eddy

(57) **Abstract**

Method (1) for preparing pre-cooked potato chips, for preventing discoloration and oxidation of non-prefried potato chips upon opening their packaging, characterised in that it comprises the following steps: the blanching (4) of raw pre-cut potato chips at a temperature of 70 to 90°C, and for a sufficiently long time between 5 and 30 minutes, which is chosen such that the guaiacol discolouring time in a peroxidase test (9) on the potato chip is longer than 15 seconds; the cooling (7) to a core temperature of between 0°C and 4°Cand the packaging (8)in bags in an inert or low-oxygen atmosphere.

## Description

The present invention relates to a method for preparing pre-cooked potato chips.

More specifically, the invention is intended to prevent discoloration and oxidation of non- prefried potato chips upon opening their packaging.

It is known from NL 8.800.667 that pre-fried potato chips, that are not frozen, need to be fried immediately after delivery. Within 24 h the taste deteriorates to the extent that optimal quality cannot be guaranteed anymore, which limits the storage time for fresh pre-fried potato chips.

For non-prefried fresh potato chips the patent describes a vacuum or low pressure packaging which enables these potato chips to be stored at least for 6 weeks. The problem remains that once the packaging is opened, the storage time is very limited and packages have to be kept small, to prevent the waste of potato chips that cannot be fried immediately.

The patent uses a blanching step to increase the shelf life of vacuum packaged chips beyond 6 weeks. In example I it is shown that unpacked non-prefried potato chips can be stored for only 10 minutes to 30 minutes before discoloration occurs.

This invention aims at preventing this fast discoloration and oxidation of fresh non-prefried potato chips.
The purpose of the present invention is to provide a solution to the aforementioned disadvantages and other disadvantages.

To this end the invention concerns a method for preparing pre-cooked potato chips that comprises the following steps: the blanching of raw pre-cut potato chips at a temperature of 70-90°C, and for a sufficiently long time between 5 and 30 minutes, which is chosen such that the guaiacol discolouring time in a peroxidase test on the potato chip is longer than 15 seconds; the cooling to a core temperature of between 0°C and 4°C; the packaging in bags in an inert or low-oxygen atmosphere.

An advantage of this method for processing companies is that the pre-cooked potato chips, received as a fresh, non-pre-cooked product, can be kept cool in the open packaging for more than 24 hours without discolouring and without being oxidation-sensitive.

Another advantage of this method for processing companies is that there is no water discharge in the packaging and that the potato chips can be kept for longer as a result of a better microbial quality.

An additional advantage of this method is that the blanching stage leaches out reducing sugars and reduces the water content, which enables the potato chips to be pre-fried and post-fried at lower temperatures, resulting in time and energy savings.

The first frying of potato chips prepared from chips that have been pre-cooked according to the method described above is done at a temperature of 135°C for 5.5 minutes, followed by a cooling stage of 5 minutes at room temperature and the second frying is done at a maximum temperature of 157°C for 2.5 to 3 minutes.

These lower temperatures for the first frying and second frying of potato chips are possible because they contain less water after this pre-cooking.

An advantage of these shorter frying times at lower temperatures is that less fat penetrates the chips. This, together with a lower sugar content due to sugars leaching out during the blanching stage, leads to a finished potato chip with up to 20% lower calorific value.

An additional advantage of the shorter frying times at lower temperatures is the energy saving that results from this.

With the intention of better showing the characteristics of the invention, a couple of preferred embodiments are described hereinafter by way of an example, without any limiting nature, of the method according to the invention, with reference to the accompanying drawings, wherein:
figure 1 shows the different steps of the method for preparing pre-cooked potato chips according to the invention.
figure 2 presents a readiness test that can be used in the method according to the invention.
figure 3 shows the successive stages of the method for the first frying and second frying of pre-cooked potato chips according to the invention.

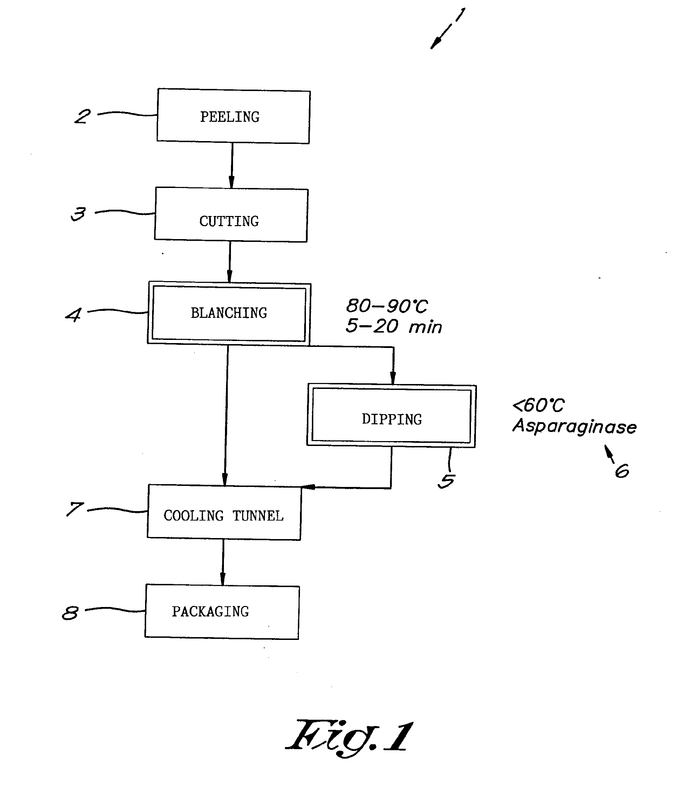

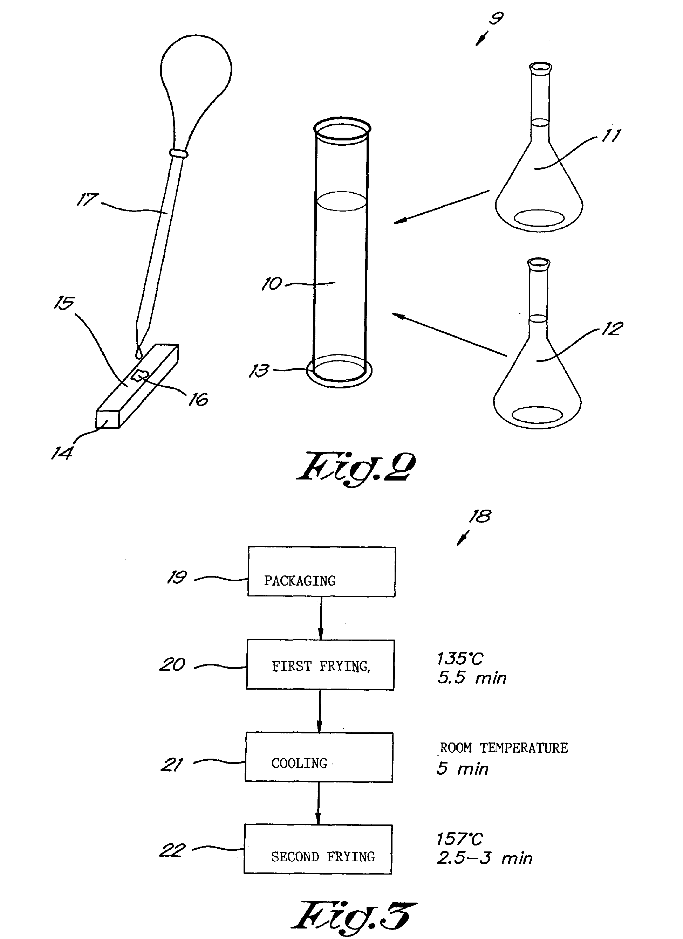

Figure 1 describes the different steps of a method 1 for preparing pre-cooked potato chips in which the steps consist of peeling 2 the fresh potatoes, cutting 3 them into chips, blanching 4 according to the invention into pre-cooked chips at a temperature of 80°C to 90°C, and preferably from 70°C to 90°C, for 5 to 20 minutes, and preferably for 5 to 30 minutes whereby the duration is determined on the basis of the readiness test presented in figure 2, , the cooling 7 in a cooling tunnel to a temperature of between 0°C and 4°C, the packaging 8 of the pre-cooked potato chips into packaging, preferably in a low-oxygen or inert atmosphere.

The readiness test described above is to determine the duration between 5 and 30 minutes that the pre-cooked chips have to be blanched for.

This test can of course be done for every cooking process, but in practice it comes down to this test being done beforehand for chips of a certain thickness of a certain type of potato, and from a certain growing season. Once these tests are known for a specific combination of these conditions, the process can be routinely repeated without having to do the test each time.

An example of the aforementioned readiness test is shown schematically in figure 2, and more specifically it is a peroxidase readiness test 9.

The readiness is measured in this test by determining the enzymatic activity of the peroxidase in the chips. This is done by using a solution 10 consisting of guaiacol, ethanol and hydrogen peroxide.

This solution 10 is prepared by diluting 0.5 ml guaiacol and 5 ml ethanol with demineralised water up to the graduation mark in a first 50 ml volumetric flask 11. In a second 50 ml volumetric flask 11, 2.95 ml hydrogen peroxide (30%) is diluted with demineralised water up to the graduation mark. Both flasks are combined in a receptacle 13 and stored at 4°C in the dark.

To conduct the peroxidase test, the potato chips 14 are cut in half lengthways and a number of droplets 16 of the mixture are added on the cut surfaces 15 with a pipette 17. The solution can only start to discolour red after 30 seconds, and preferably only after 15 seconds, if the pre-cooking duration is sufficient.

The method as described above enables pre-cooked chips to be obtained that can be distributed in this form to the end user or to catering businesses, and which have the appearance of a fresh product, i.e. a raw pre-cut chip.

The subsequent frying method of the pre-cooked chip is also important to obtain a healthy chip with a lower calorific value than traditionally fried chips.

This frying method 18 is schematically shown in figure 3 whereby the pre-packaged chips are taken out of their packaging 19, whereby these pre-cooked chips are fried in two stages in a fat, such as oil or similar, i.e. the first frying 20 of the chips at a temperature of 135°C for 5.5 minutes followed by a cooling stage 21 of 5 minutes at room temperature, and by the second frying 22 of the chips at a maximum temperature of 157°C for 2.5 to 3 minutes.

These temperatures are lower than with traditional potato chips.

The methods according to the invention described above have proven that they yield a healthier chip in practice that is characterised in that its calorific value is less than that of traditional chips.

This does not detract from the fact that there can be departures to the set temperatures and frying times, which can also yield results that are just as good, or even other types of methods.

It is thus important to emphasise that pre-cooked chips and fried chips with the healthy characteristics that are obtainable as a fresh product according to the aforementioned methods are in themselves new, and consequently justify a claim in the form of a product obtainable from a method to protect the new pre-cooked or fried potato chip.

The present invention is by no means limited to the embodiments described as an example and shown in the drawings, but a method according to the invention can be realised in all kinds of variants, without departing from the scope of the invention.

## Claims

1. Method (1) for preparing pre-cooked potato chips, for preventing discoloration and oxidation of non-prefried potato chips upon opening their packaging, **characterised in that** it comprises the following steps: the blanching (4) of raw pre-cut potato chips at a temperature of 70 to 90°C, and for a sufficiently long time between 5 and 30 minutes, which is chosen such that the guaiacol discolouring time in a peroxidase test (9) on the potato chip is longer than 15 seconds; the cooling (7) to a core temperature of between 0°C and 4°C; the packaging (8)in bags in an inert or low-oxygen atmosphere.

2. Method for the first frying and second frying of the pre-cooked chips obtained according to the method of claim 1, **characterised in that** the first frying is done at a temperature of 135°C for 5.5 minutes, followed by a cooling stage at room temperature for 5 minutes, followed by the second frying at a maximum temperature of 157°C for 2.5 to 3 minutes.

3. Fresh non-prefried potato chips obtainable from the application of the method of claim 1, **characterised in that** they can be kept cool in the open packaging for more than 24 hours without discoloring and without being oxidation-sensitive.
